## Europäisches Patentamt

## European Patent Office

## Office européen des brevets

(19)

(11) Veröffentlichungsnummer: **0 252 232**
**B1**

(12) **EUROPÄISCHE PATENTSCHRIFT**

(45) Veröffentlichungstag der Patentschrift:
**31.01.90**

(51) Int. Cl.⁴: **B 62 D 1/18,** F 16 F 7/12,
**B 60 R 21/04**

(21) Anmeldenummer: **87105940.8**

(22) Anmeldetag: **23.04.87**

(54) **Haltevorrichtung für eine Lenksäule eines Kraftfahrzeugs.**

(30) Priorität: **11.07.86 DE 3623414**

(43) Veröffentlichungstag der Anmeldung:
**13.01.88 Patentblatt 88/2**

(45) Bekanntmachung des Hinweises auf die Patenterteilung:
**31.01.90 Patentblatt 90/5**

(84) Benannte Vertragsstaaten:
**DE ES FR GB IT SE**

(56) Entgegenhaltungen:
**DE-A- 2 143 935**
**DE-A- 2 414 948**
**DE-A- 2 623 521**
**FR-A- 2 227 745**
**FR-A- 2 276 978**
**US-A- 3 897 848**
**US-A- 3 938 821**
**US-A- 3 964 578**

(73) Patentinhaber: **Dr.Ing.h.c. F. Porsche
Aktiengesellschaft, Porschestrasse 42,
D-7000 Stuttgart 40 (DE)**

(72) Erfinder: **Wierschem, Franz-Rudolf, Dipl.-Ing. FH,
Habichtstrasse 8, D-7251 Weissach (DE)**

ACTORUM AG

## Beschreibung

Die Erfindung bezieht sich auf eine Haltevorrichtung nach dem Oberbegriff des Anspruchs 1.

Bei einem das Fahrzeug stark verzögernden Zusammenstoß wird der Fahrer mit einer hohen Relativgeschwindigkeit bezüglich des Fahrzeugs nach vorne geworfen und prallt gegen das Lenkrad. Die in der Vorwärtsbewegung vor allem des Oberkörpers des Fahrers entstehende kinetische Energie soll nun unter Absorption von Energie in der Lenkanlage durch eine plastische Verformung aufgenommen und hierdurch eine Verletzung des Fahrers weitgehend ausgeschaltet werden. Aus der DE-C-2 623 521 ist ein in der Lenksäule angeordnetes, zylinderförmiges Deformationselement mit Ausnehmungen bekannt geworden, das eine derartige Energieabsorption zuläßt. Bei einer Lenkanlage mit einem im Lenkrad angeordneten Airbag ist es aufgrund des hierfür benötigten Platzes im Lenkrad nicht mehr möglich, dieses Deformationselement einzubauen. Zum Erzielen einer im wesentlichen entsprechenden Wirkung, wie mit einem zylindrischen Deformationselement, ist es aus der DE-C-2 143 935 bekannt, das die Lenksäule umgebende Lenkschutzrohr über eine Tragkonsole mit dem Fahrzeugaufbau zu verbinden, wobei diese Tragkonsole als energieabsorbierendes Verformungselement ausgeführt ist und einen als Deformationselement ausgebildeten geschwächten Bereich aufweist, der in einer zur auftreffenden Kraft angeordneten, etwa parallelen horizontalen Ebene liegt. Mit einer solchen Ausbildung der Tragkonsole ist im wesentlichen nur eine Deformation in Richtung der Aufprallkraft möglich, dagegen wird keine ausweichende Verstellung der Lenksäule in Hochrichtung erzielt. Außerdem weist eine solche bekannte Tragkonsole mit geschwächtem Bereich in der Horizontalebene eine gewollte Weichheit auf, die es nicht ermöglicht, eine Unterdrückung eines Lenkradzitterns im Fahrbetrieb zu gewährleisten.

Des weiteren ist aus der FR-A-2 227 745 ein Fahrzeug mit einer Kniefangvorrichtung bekannt, die einen Träger umfaßt, der über ein balgförmiges Deformationselement am Fahrzeugaufbau abgestützt ist. Bei einer durch die Knie des Fahrers erfolgten Beaufschlagung des mit einer elastischen Auflage versehenen Trägers wird das Deformationselement unter der Aufnahme von Energie verformt.

Die Aufgabe der Erfindung besteht darin, eine Haltevorrichtung für eine Lenkanlage zu schaffen, die eine gezielte Weichheit zur Verformung bei einem Aufprall und gleichzeitig eine möglichst große Steifheit zur schwingungsfreien Lagerung der Lenkanlage aufweist.

Diese Aufgabe wird erfindungsgemäß durch die kennzeichnenden Merkmale des Anspruchs 1 gelöst. Weitere vorteilhafte Ausbildungen der Erfindung beinhalten die Unteransprüche.

Die mit der Erfindung hauptsächlich erzielten Vorteile bestehen darin, daß eine relativ steife Haltevorrichtung für die Lenkanlage gleichzeitig als einziges Deformationselement in der Lenkanlage dient und eine ausreichende Energieabsorption bei einem Aufprall gewährleistet. Durch die besondere Lage der Verformungsschritte an einer Schmalseite der Öffnungen in den Seitenteilen, kann allein durch die längsgerichtete Aufprallkraft und durch eine vertikale Komponente hierzu nur eine unzureichende Deformation der Tragkonsole und somit keine ausreichend wirksame Energieabsorption erzielt werden, zumal als versteifendes Element ein mit dem Lenkschutzrohr verbundenes Lagerblech wirkt.

Zur Erzielungn einer optimierten Energieabsorbtion wird die über das Lenkrad eingeleitete Längskraft durch eine weitere, über eine Kniefangvorrichtung bzw. einen Abstützbock in das Lenkschutzrohr eingeleitete Hochkraft ergänzt. Diese Kraft wird bei einem Aufprall der Knie des Fahrers an der Kniefangvorrichtung erzeugt, die außenseitig gepolstert ist, über die aber trotzdem eine Kraftkomponente durch den Abstützbock in das Lenkschutzrohr eingeleitet wird. Diese Kraftkomponente wirkt vorzugsweise — in bezug auf das Lenkrad — vor der Tragkonsole auf diese ein, so daß eine Hochschwenkbewegung der Lenksäule und eine den Verhältnissen angepaßte Deformation der Tragkonsole erzielbar ist.

In vorteilhafter Weise kann der Abstützbock entweder mit dem Lenkschutzrohr starr verbunden sein oder aber der Abstützbock ist im Abstand zum Lenkschutzrohr angeordnet. Des weiteren ist es auch möglich, den Abstützbock am Lenkschutzrohr zu befestigen, wobei dieser dann im Abstand einem Träger der Kniefangvorrichtung gegenübersteht.

Ausführungsbeispiele der Erfindung sind in der Zeichnung dargestellt und werden im folgenden näher beschrieben. Es zeigt:

Fig. 1 eine schematische Darstellung der Haltevorrichtung mit Lenkanlage sowie den auftretenden Kräften bei einem Aufprall,

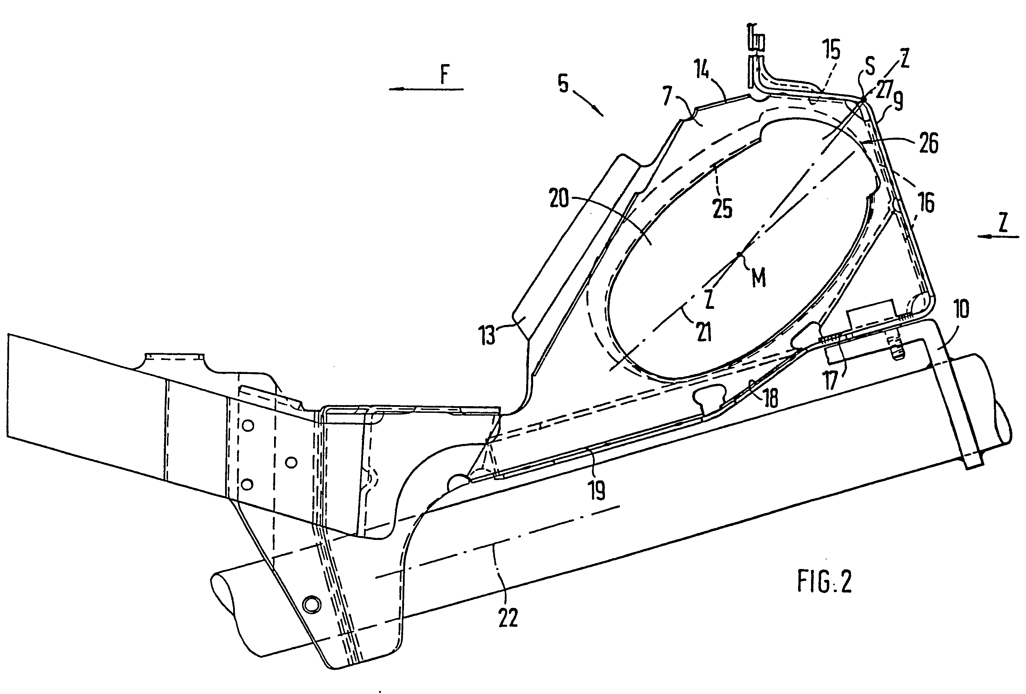

Fig. 2 eine Seitenansicht der Haltevorrichtung,

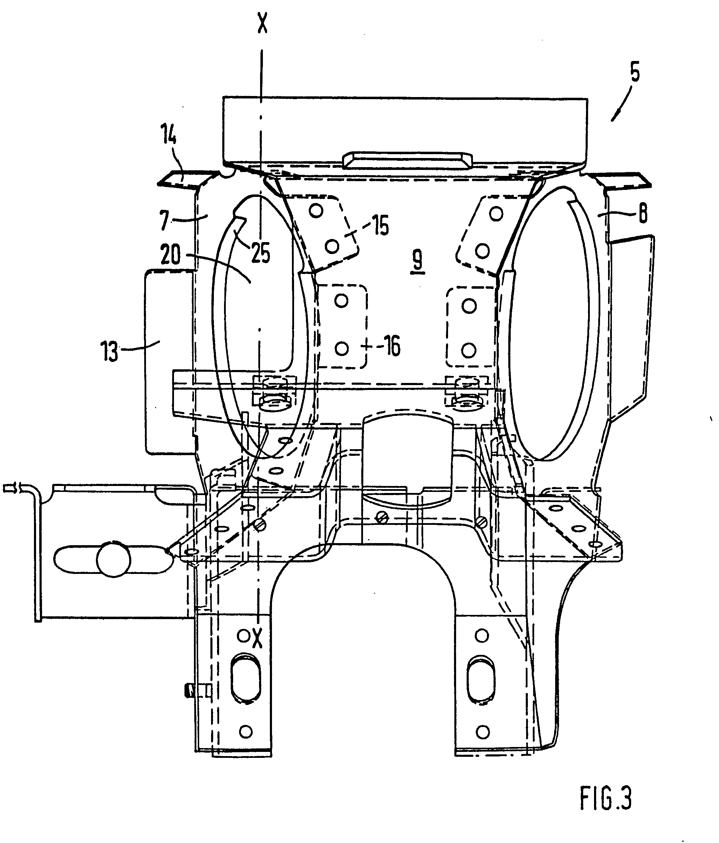

Fig. 3 eine Ansicht auf die Haltevorrichtung in Pfeilrichtung Z der Fig. 2 gesehen,

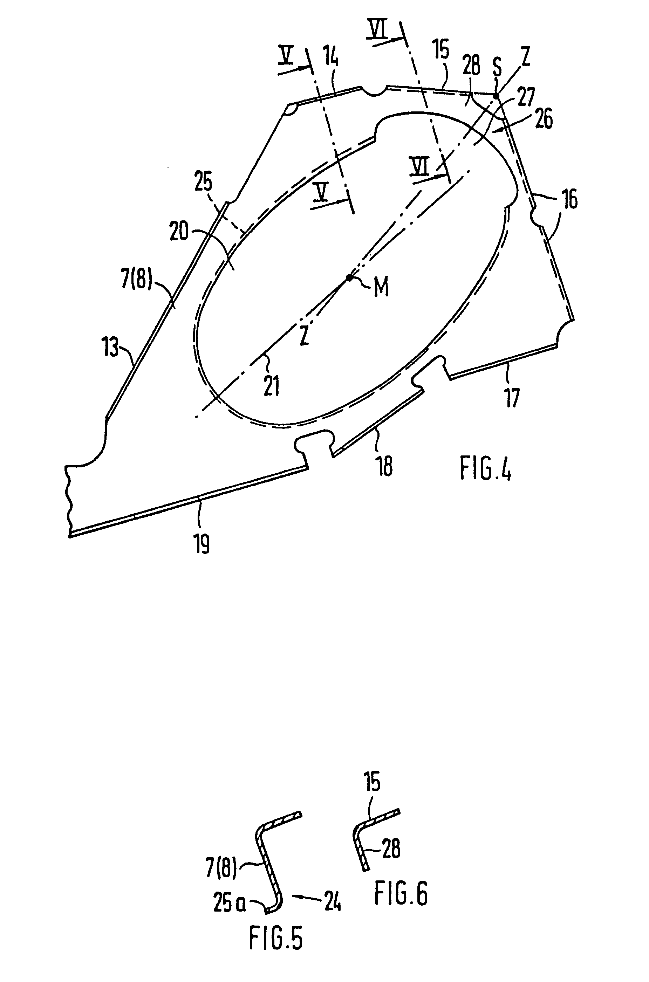

Fig. 4 eine Seitenansicht eines Seitenteils mit ovalförmiger Öffnung und einem Verformungsabschnitt,

Fig. 5 einen Schnitt nach der Linie V-V der Fig. 4 durch einen abgewinkelten Rand der Öffnung,

Fig. 6 einen Schnitt nach der Linie VI-VI der Fig. 4 durch den Rand im Bereich des Verformungsabschnittes,

Fig. 7 eine Seitenansicht der Haltevorrichtung, teilweise im Schnitt, mit einem dreieckförmigen Abstützbock,

Fig. 8 bis 10 eine weitere Ausführungsform eines Abstützbocks in einer Seiten-, Vorder- und Draufsicht,

Fig. 11 eine weitere Ausführung eines Abstützbocks in einer Seitenansicht,

Fig. 12 eine weitere Ausführung eines mit dem Lenkschutzrohr starr verbundenen Abstützbocks, und

Fig. 13 eine Ansicht des Abstützbocks gemäß Fig. 12, in Pfeilrichtung R gesehen.

Die Lenkanlage 1 umfaßt im wesentlichen ein Lenkschutzrohr 2, in dem eine Lenksäule 3 gelagert ist und mit dem ein Lenkrad 4 verbunden wird. Über eine Haltevorrichtung 5 ist die Lenkanlage 1 am Fahrzeugaufbau 6 befestigt. Im Lenkrad 4 ist ein Airbag angeordnet, der bei einem Aufprall mit Luft gefüllt wird und den Oberkörper sowie den Kopf des Fahrers abfängt.

2

Die Haltevorrichtung 5 umfaßt eine aus zwei Seitenteilen 7 und 8 sowie einem Lagerblech 9 gebildete und als Deformationsglied wirkende Tragkonsole, welche über einen Lagerbock 10 oder dergleichen mit dem Lenkschutzrohr 2 verbunden wird. Die Haltevorrichtung 5 ist oberhalb des Lenkschutzrohrs 2 angeordnet, wobei eine Kniefangvorrichtung 11 mit einem integrierten Kraftübertragungselement 12 unterhalb des Lenkschutzrohrs 2 vorgesehen ist.

Die Seitenteile 7 und 8 bestehen aus Blechformteilen, die symmetrisch zu beiden Seiten der Lenksäule 3 in vertikalen Längsebenen X-X angeordnet sind und sich in Fahrtrichtung F erstrecken. Sie weisen Halteschenkel 13, 14 zur Verbindung mit dem Fahrzeugaufbau 6 sowie weitere Halteschenkel 15, 16, 17, 18, 19 zur Verbindung mit dem übergreifenden Lagerblech 9 auf.

In den Seitenteilen 7, 8 sind ovalförmige Öffnungen 20 eingearbeitet, deren Längsmittenachse 21 unter einem Winkel $\alpha$ zur Mittenachse 22 der Lenksäule 3 angestellt ist. Ein Rand 25 der Öffnung 20 ist als Winkelprofil 24 mit einem Schenkel 25a ausgeführt. In einem vorneliegenden, dem Lenkrad 4 zugerichteten Bereich, an der einen Schmalseite 26 der Öffnung 20, ist eine über den Formverlauf der Öffnung 20 hinausgeführte bogenförmige Ausnehmung 27 ausgearbeitet. Diese ist gegenüber dem übrigen Öffnungsrand 25 geschwächt ausgeführt und bildet einen Verformungsabschnitt 20a. Der Schenkel 25a des Profils 24 ist zur Schwächung weggeschnitten, so daß in diesem Bereich nur noch das ebene Grundblech 28 verbleibt, welches in die Halteschenkel 15 und 16 einläuft. Die Ausnehmung 27 verläuft in relativ kleinem Abstand zu den Halteschenkeln 15 und 16, die die Ausnehmung 27 dachförmig umgrenzen und etwa symmetrisch zu einer durch den Scheitelpunkt S der Schenkel 15, 16 und den Mittelpunkt M der Öffnung 20 verlaufenden Ebene Z-Z angeordnet sind. Dieser geschwächte Bereich bildet die Deformationszone, in der die Tragkonsole definiert bei einem Aufprall unter Absorption von Energie plastisch zusammendrückbar ist.

Da sich die Seitenteile 7 und 8 im wesentlichen nur in vertikaler Richtung verformen können, ist unterhalb des Lenkschutzrohrs 2 das mit der Kniefangvorrichtung 11 verbundene Element 12 vorgesehen, das kraftübertragend mit dem Lenkschutzrohr 2 verbunden wird. Eine beim Aufprall des Oberkörpers auf das Lenkrad 4 durch die Längskräfte $F_L$ bewirkte Bewegung der Lenksäule 3 wird über die Schrägkraft $F_S$ von den Knien des Fahrers auf die Kniefangvorrichtung 11 und die entsprechende Hochkraftkomponente $F_H$ unterstützt, so daß eine optimierte Deformation der Seitenteile 7, 8 erfolgt.

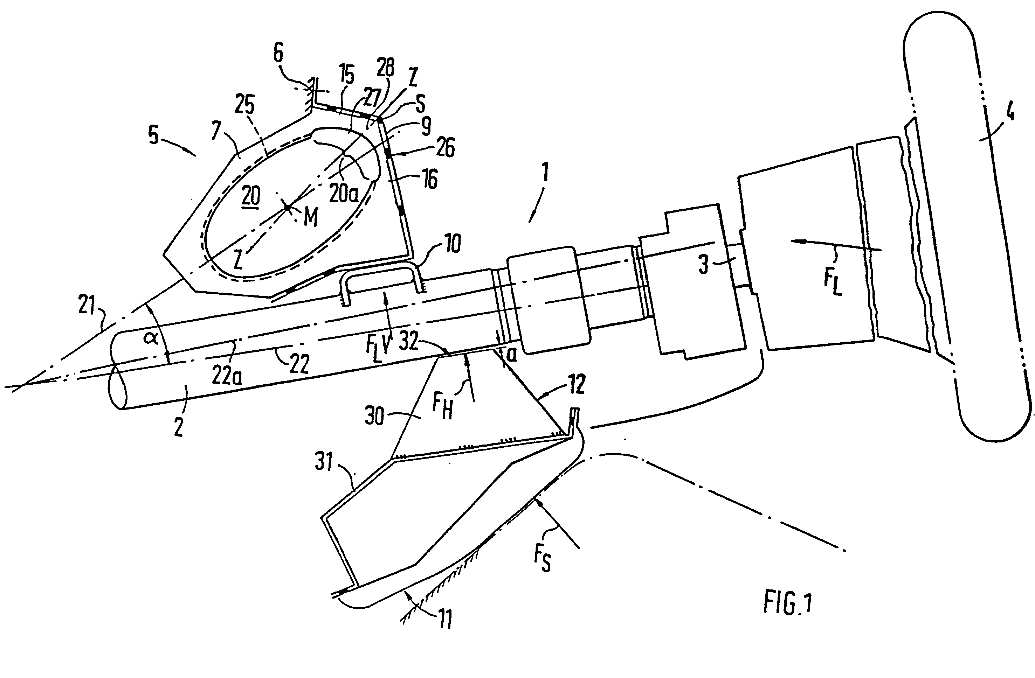

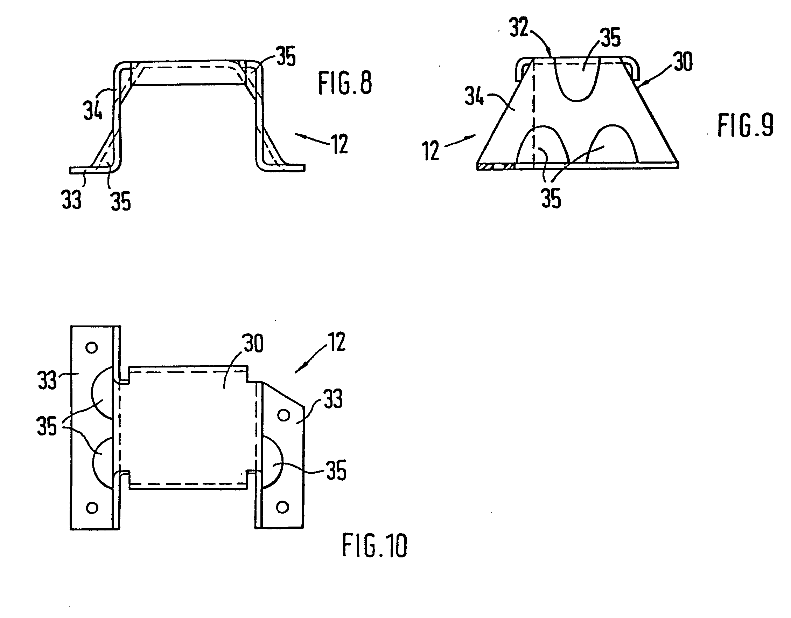

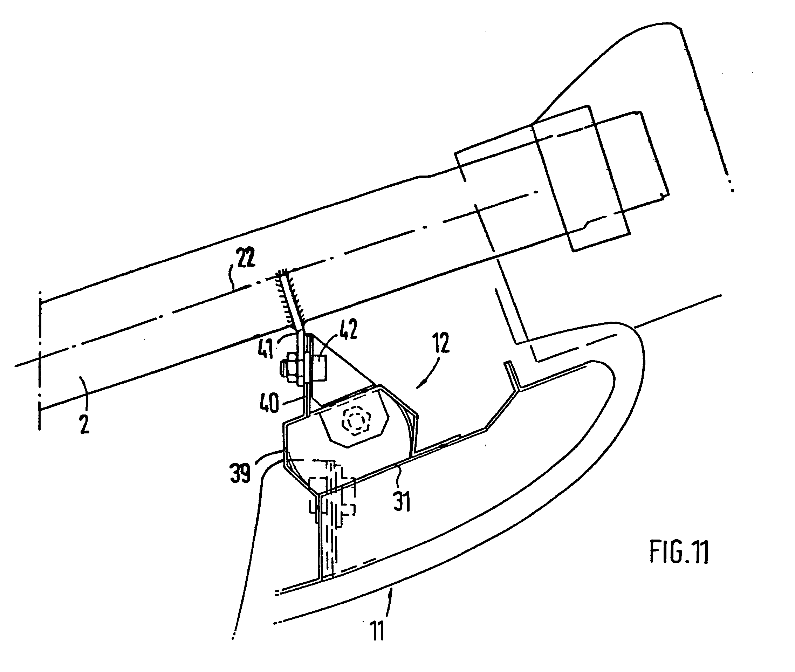

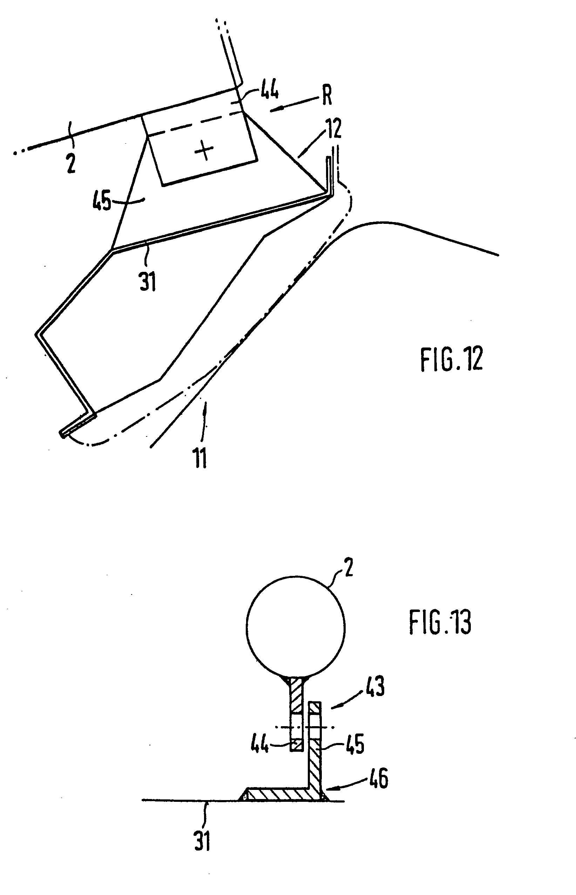

Das Kraftübertragungselement 12 ist entweder mit dem Lenkschutzrohr 2 fest verbunden (Fig. 11 und 12) oder in einem geringen Abstand zum Lenkschutzrohr 2 angeordnet (Fig. 1 und 7 bis 10).

Das gemäß Fig. 1 sowie der Fig. 8 bis 10 ausgebildete Element 12 besteht aus einem kastenförmigen Abstützbock 30, der am Träger 31 der Kniefangvorrichtung 11 befestigt ist. Dieser Bock 30 weist eine dem Lenkschutzrohr 2 zugerichtete plane Druckfläche 32 auf, die sich über in Schenkeln 33 auslaufenden Seitenflächen 34 zum Träger 31 hin abstützen.

Im Übergangsbereich von der Druckfläche 32 zu den Seitenflächen 34 sowie von diesen zu den Schenkeln 33 sind Eindrückungen bzw. Ausdrückungen 35 vorgesehen.

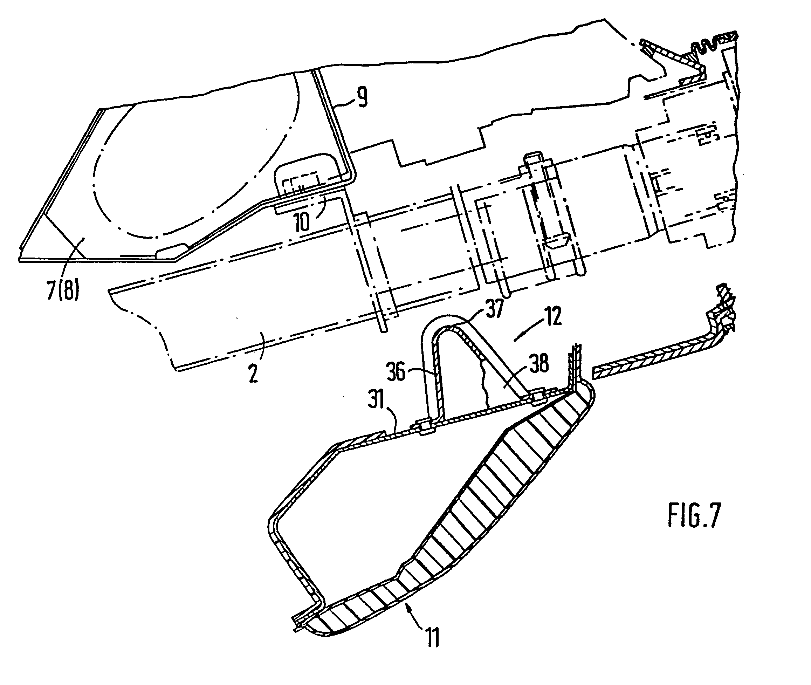

Nach einer weiteren Ausbildung gemäß Fig. 7 kann das Element auch aus einem dreieckförmigen Profil 36 bestehen, dessen Spitze 37 dem Lenkschutzrohr 2 zugerichtet ist und das stirnseitig über Wandungen 38 geschlossen wird.

Nach einer weiteren Ausführung gemäß Fig. 11 besteht das Element 12 aus einem kastenförmigen, durch Profile zusammengesetzten Abstützbock 39, der einen dem Lenkschutzrohr 2 zugerichteten vorstehenden Schenkel 40 umfaßt, welcher mit einem Festschenkel 41 des Lenkschutzrohrs 2 lösbar über eine Schraube 42 verbunden ist, die gleichzeitig eine Einstellung ermöglicht.

Eine weitere Ausführung eines Abstützbocks 43 ist in Fig. 13 dargestellt. Dieser umfaßt einen mit dem Lenkschutzrohr 2 starr verbundenen ersten Schenkel 44, der mit einem weiteren Schenkel 45 eines Winkelprofils 46 lösbar verbunden ist, welcher wiederum starr am Tragprofil 31 befestigt wird.

Bei einem Aufprall des Fahrers mit seinem Oberkörper auf das Lenkrad 4 bzw. auf den Luftsack des Airbag-Systems werden gleichzeitig die Knie des Fahrers gegen die Kniefangvorrichtung 11 gedrückt. Die vom Oberkörper in die Lenkanlage eingeleitete Längskraft $F_L$ sowie die hieraus resultierende vertikale Kraftkomponente $F_LV$ wird unterstützt von der Schrägkraft $F_S$ und der hieraus resultierenden Kraftkomponente $F_H$. Diese Kraftkomponente $F_H$ wird aufgrund der Lage des Elements 12 — in bezug auf das Lenkrad 4 — vor der Haltevorrichtung 5 so in das Lenkschutzrohr 2 eingeleitet, daß ein Hochschwenken der Lenkanlage erfolgt und diese z.B. die Lage gemäß der Achse 22a einnimmt. Infolge dieser Verstellung in Hochrichtung erfolgt in Abhängigkeit von der Stärke des Aufpralls eine Deformation der Tragkonsole bzw. der Seitenteile 7 und 8 sowie des Lagerblechs 9.

## Patentansprüche

1. Haltevorrichtung für eine Lenksäule eines Kraftfahrzeugs, insbesondere für eine ein Lenkrad mit Airbag aufweisende Lenksäule, über eine zwischen dem Fahrzeugaufbau und einem Lenkschutzrohr angeordnete, energieabsorbierende Tragkonsole, die mit dem Lenkschutzrohr verbunden ist und Verformungsabschnitte aufweist und unterhalb des Lenkschutzrohrs eine am Fahrzeugaufbau befestigte Kniefangvorrichtung angeordnet ist, die ein starres Kraftübertragungselement umfaßt, dadurch gekennzeichnet, daß das Kraftübertragungselement (12) gegenüberliegend zur Tragkonsole (7, 8, 9) gehalten ist, die zu beiden Seiten der Lenksäule (3) angeordnete und über ein Lagerblech (9) miteinander verbundene und zum Fahrzeugaufbau abgestützte Seitenteile (7, 8) umfaßt, die sich in vertikalen Längsebenen (X-X) erstrecken und jeweils ovalförmige Öffnungen (20) aufweisen, deren Ränder (25) an den Lenkrad (4) zugerichteten Schmalseiten (26) mit Verformungsabschnitten (20a) versehen sind und mit dem Element (12) das Lenkschutzrohr (2) kraftübertragend derart verbunden ist, daß eine bei einem Aufprall erfolgende Bewegung der Lenksäule (3) durch in das Lenkrad (4) eingeleitete Längskräfte (F$_L$) — unter Absorption von Energie in den Verformungsabschnitten (20a) der Seitenteile (7, 8) — über in das Kraftübertragungselement (12) eingeleitete Querkräfte (F$_S$ bzw. F$_H$) unterstützt wird.

2. Haltevorrichtung nach Anspruch 1, dadurch gekennzeichnet, daß die Ränder der Verformungsabschnitte (20a) in den Seitenteilen (7, 8) zu den anschließenden, als Winkelprofil (24) ausgeführten Rändern (25) der Öffnungen (20) geschwächt ausgeführt sind.

3. Vorrichtung nach Anspruch 2, dadurch gekennzeichnet, daß die Verformungsabschnitte (20a) durch bogenförmige Ausnehmungen (27) an den Schmalseiten der ovalförmigen Öffnungen (20) gebildet über deren Formverlauf hinausgeführt sind und in einem relativ geringen Abstand zu begrenzenden Halteschenkeln (15, 16) der Seitenteile (7, 8) verlaufen.

4. Vorrichtung nach Anspruch 3, dadurch gekennzeichnet, daß die beiden Halteschenkel (15, 16) unter einem Winkel dachförmig angestellt sind und die Ausnehmung (27) etwa symmetrisch zu einer durch einen Scheitelpunkt (S) der Halteschenkel (15, 16) und einen Mittelpunkt (M) der ovalförmigen Öffnungen (20) verlaufenden Ebene (Z-Z) angeordnet ist.

5. Vorrichtung nach Anspruch 1, dadurch gekennzeichnet, daß das Kraftübertragungselement (12) einen kastenförmigen Abstützbock (30) umfaßt, der an einem querverlaufenden Träger (31) der Kniefangvorrichtung (11) gehalten und in einer Ebene zwischen den Seitenteilen (7, 8) angeordnet ist und dem Lenkschutzrohr (2) mit einem relativ geringen Abstand (a) gegenübersteht.

6. Vorrichtung nach Anspruch 5, dadurch gekennzeichnet, daß der Abstützbock (30) eine dem Lenkschutzrohr (2) zugerichtete plane Druckfläche (32) aufweist, die sich über in Schenkeln (33) auslaufenden Seitenflächen (34) zur Kniefangvorrichtung (11) hin abstützt und im Übergangsbereich von der Druckfläche (32) zu den Seitenflächen (34) sowie von diesen zu den Schenkeln (33) Eindrückungen bzw. Ausdrückungen (35) Fig. 9) aufweist.

7. Vorrichtung nach Anspruch 6, dadurch gekennzeichnet, daß ein Abstützbock (36) im Querschnitt aus einem dreieckförmigen Profil besteht, dessen Spitze (37) dem Lenkschutzrohr (2) zugerichtet und stirnseitig über Wandungen (38) geschlossen ist (Fig. 7).

8. Vorrichtung nach einem oder mehreren der vorhergehenden Ansprüche, dadurch gekennzeichnet, daß der Träger (31) der Kniefangvorrichtung (11) mit einem am Lenkschutzrohr (2) befestigten, kastenförmigen Abstützbock (39) verbunden ist, der einen dem Lenkschutzrohr (2) zugerichteten vorstehenden Schenkel (40) umfaßt, welcher mit einem Festschenkel (41) des Lenkschutzrohrs (2) lösbar verbunden ist.

9. Vorrichtung nach einem oder mehreren der vorhergehenden Ansprüche, dadurch gekennzeichnet, daß mit einem Festschenkel (44) des Lenkschutzrohrs (2) ein Winkelprofil (46) lösbar verbunden wird, das am Träger (31) der Kniefangvorrichtung (11) gehalten ist.

10. Vorrichtung nach einem oder mehreren der vorhergehenden Ansprüche, dadurch gekennzeichnet, daß das Kraftübertragungselement (12) — in bezug auf das Lenkrad (4) — vor der Haltevorrichtung (5) angeordnet ist und daß eine Kraftkomponente (F$_H$) der Hochkraft (F$_S$) unter einem Hebelarm zur Vorrichtung (5) in die Lenksäule (3) eingeleitet wird.

## Claims

1. A holding device for a steering column of a motor vehicle, in particular for a steering column having a steering wheel with an airbag, by way of an energy-absorbing support bracket which is arranged between the vehicle body and a steering protection tube and which is connected to the steering protection tube and has deformation portions, and a bent catch device, which is secured to the vehicle body and which comprises a rigid power-transmission element, is arranged below the steering protection tube, characterized in that the power-transmission element (12) is held opposite the support bracket (7, 8, 9) which embraces lateral parts (7, 8) arranged on both sides of the steering column (3) and connected to one another by way of a bearing plate (9), the lateral part (7, 8) being supported with respect to the vehicle body and extending in vertical longitudinal planes (X-X) and being provided with respective oval-shaped openings (20), the edges (25) of which are provided with deformation portions on narrow sides (26) facing the steering wheel (4), the steering protection tube (2) being connected to the element (12) in a power-transmitting manner in such a way that movement of the steering column (3) arising during a collision is supported by longitudinal forces (F$_L$) introduced into the steering wheel (4) — with the absorption of energy in the deformation portions (20a) of the lateral parts (7, 8) — by way of transverse forces (F$_S$ and F$_H$ repsectively) introduced into the power-transmission element (12).

2. A holding device according to Claim 1, characterized in that the edges of the deformation portions (20a) in the lateral parts (7, 8) are weakened towards the adjacent edges (25) of the openings (20) constructed as angle sections (24).

3. A holding device according to Claim 2, characterized in that the deformation portions (20a) formed by curved recesses (27) in the narrow sides of the oval-shaped openings (20) are pressed out over the shape thereof, and extend at a relatively short distance from limiting holding arms (15, 16) of the lateral parts (7, 8).

4. A holding device according to Claim 3, characterized in that the two holding arms (15, 16) are set at an angle in the manner of a roof and the recess (27) is arranged approximately symmetrically to a plane (Z-Z) extending through an apex (S) of the holding arms (15, 16) and a centre point (M) of the oval-shaped openings (20).

5. A holding device according to Claim 1, characterized in that the power-transmission element (12) comprises a box-shaped support block (30) which is held on a transversely extending support (3) of the bent catching device (11) and is situated in a plane between the lateral parts (7, 8) and is opposite the steering protection tube (2) at a relatively short distance (a).

6. A holding device according to Claim 5, characterized in that the support block (30) comprises a plane pressure surface (32) facing the steering protection tube (2) and which is supported with respect to the bent catching device (11) by way of lateral surfaces (34) terminating in arms (33) and has pressed-in or pressed-out portions (35) in the transition area from the pressure surface (32) to the lateral surface (34) and from the latter to the arms (33) (Fig. 9).

7. A holding device according to Claim 6, characterized in that a support block (36) comprises a triangular profile in cross-section, the apex (37) of which faces the steering protection tube (2) and is closed at the sides by way of walls (38) (Fig. 7).

8. A holding device according to one or more of the preceding Claims, characterized in that the support (31) of the bent catching device (11) is connected to a box-shaped support block (39) secured to the steering protection tube (2) and which comprises a projecting arm (40) facing the steering protection tube (2) and which is detachably connected to a fixed arm (41) of the steering protection tube (2).

9. A holding device according to one or more of the preceding Claims, characterized in that an angle profile (46), which is held on the support (31) of the bent catching device (11), is detachably connected to a fixed arm (44) of the steering protection tube (2).

10. A holding device according to one or more of the preceding Claims, characterized in that the power-transmission element (12) is arranged — relative to the steering wheel (4) — in front of the holding device (5) and one force component ($F_H$) of the high force ($F_S$) is introduced into the steering column (3) under a lever arm to the device (5).

**Revendications**

1. Dispositif de fixation pour une colonne de direction de véhicule automobile, en particulier pour une colonne de direction comportant un volant muni d'un dispositif à poche d'air, avec une console support absorbeuse d'énergie disposée entre la carrosserie du véhicule et un tube de protection de la colonne de direction, qui est réunie audit tube de protection de la direction et qui comporte des zones de déformation et avec, disposé en dessous du tube de protection de la colonne de direction, un dispositif de blocage des genoux fixé à la carrosserie du véhicule automobile et comportant un élément rigide de transmission des efforts, caractérisé par le fait que l'élément de transmission des efforts (12) est fixé en face de la console support (7, 8, 9) qui comprend les deux faces latérales (7, 8) disposées des deux côtés de la colonne de direction (3), prenant appui sur la carrosserie du véhicule et réunies entre elles par une plaque d'assemblage (9), qui s'étendent dans des plans longitudinaux verticaux (X-X) et présentent respectivement des orifices de forme ovale (20) dont les bords (25), dans leur partie (26) correspondant au grand diamètre de la forme ovale et faisant face au volant (4) comportent des zones de déformation (20a), et que le tube de protection (2) est réuni positivement avec l'élément (12) de telle manière qu'en cas de déplacement de la colonne de direction (3) du fait des forces longitudinales ($F_L$) engendrées par collision, agissant sur le volant (4) il se trouve soutenu, avec absorption d'énergie dans les zones de déformation (20a) des faces latérales (7, 8), par les forces transversales ($F_S$, $F_H$) agissant par l'intermédiaire de l'élément (12).

2. Dispositif de fixation selon la revendication 1, caractérisé par le fait que les bords des zones de déformation (20a) des faces latérales (7, 8) sont réalisés avec une rigidité plus faible que celle des bords (25) des orifices (20) réalisés avec des sections de la forme d'une cornière profilée (24).

3. Dispositif selon la revendication 2, caractérisé par le fait que les zones de déformation (20a) sont constituées par des évidements en forme d'arcs (27) pratiqués dans les extrémités allongées des orifices de forme ovale (20) et débordant vers l'extérieur du contour desdits orifices et s'étendant à une distance relativement faible des bords de fixation (15, 16) des faces latérales (7, 8).

4. Dispositif selon la revendication 3, caractérisé par le fait que les deux bords de fixation (15, 16) sont disposés avec un certain angle entre les deux, de manière à reproduire la forme d'un toit, et que l'évidement (27) est réalisé approximativement symétrique par rapport à un plan (Z-Z) comprenant un point (S) correspondant au sommet de l'angle formé par les bords de fixation (15, 16) et un point central (M) des orifices de forme ovale (20).

5. Dispositif selon la revendication 1, caractérisé par le fait que l'élément de transmission des efforts (12) comprend un ensemble d'appui en forme de caisson (30), qui est fixé à une poutrelle support transversale (31) du dispositif de blocage des genoux (11), qui est disposé dans un plan s'étendant entre les faces latérales (7, 8) et arrive à une distance (a) relativement faible en regard du tube de protection de la direction (2).

6. Dispositif selon la revendication 5, caractérisé par le fait que le caisson d'appui (30) comporte une surface de pression plane (32) faisant face au tube de protection de la direction (2), qui par l'intermédiaire des montants latéraux (34) se terminant par les pattes (33) prend appui sur le dispositif de blocage des genoux (11), et que dans les zones de transition, entre la surface de pression (32) et les montants latéraux (34) ainsi qu'entre lesdits montants (34) et les pattes (33) il comporte des empreintes en creux ou en saillies (35) (voir figure 9).

7. Dispositif selon la revendication 6, caractérisé par le fait qu'il comprend un caisson d'appui (36) présentant, en coupe transversale un profil de forme triangulaire dont le sommet (37) est orienté vers le tube de protection de la direction (2) et dont les extrémités sont fermées par des parois (38) (voir figure 7).

8. Dispositif selon l'une quelconque ou plusieurs des revendications ci-dessus, caractérisé par le fait que la poutrelle support transversale (31) du dispositif de blocage des genoux (11) est réunie à un caisson d'appui (39) fixé au tube de protection de la direction (2), qui comprend une patte en saillie (40) orientée vers le tube de protection de la direction (2), réunie d'une manière démontable avec une patte fixe (41) faisant partie du tube de protection de la direction (2).

9. Dispositif selon une ou plusieurs des revendicatons ci-dessus, caractérisé par le fait qu'une cornière profilée (46) est réunie de manière démontable avec une partie fixe (44) faisant partie du tube de protection de la direction (2), et que la dite cornière (46) est fixée à la poutrelle support transversale (31) du dispositif d'immobilisation des genoux (11).

10. Dispositif selon l'une quelconque ou plusieurs des revendications ci-dessus, caractérisé par le fait que par rapport au volant de direction (4) l'élément de transmission des forces (12) est disposé avant le dispositif de fixation (5) et qu'une composante de force ($F_H$) de la force ascendante (Hochkraft ($F_S$)) est appliquée au dispositif (5) avec un effet de levier agissant dans la colonne de direction (3).

FIG.1

FIG.2

EP 0 252 232 B1

FIG.3

FIG.4

FIG.5

FIG.6

FIG.7

FIG.8

FIG.9

FIG.10

EP 0 252 232 B1

FIG.11

FIG.12

FIG.13